# EUROPÄISCHE PATENTANMELDUNG

(11) **EP 3 489 316 A1**
(43) Veröffentlichungstag der Anmeldung: **29.05.2019**
(21) Anmeldenummer: 17202962.1
(22) Anmeldetag: 22.11.2017
(51) Int. Cl.: C09J 5/02, C09D 175/02

(54) **NEUE SYSTEME FÜR DIE GRUNDIERUNG UND DAS KLEBEN VON BODENBELÄGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft Schichtaufbauten enthaltend Polyaspartat-Grundierungen (AG) und härtbare Zusammensetzungen auf Basis silanmodifizierter Polymere (KS) sowie ein Verfahren zum Kleben von Bodenbelägen auf vorbehandelten Untergründen.

## Beschreibung

Die vorliegende Erfindung betrifft Schichtaufbauten enthaltend Polyaspartat-Grundierungen (AG) und härtbare Zusammensetzungen auf Basis silanmodifizierter Polymere (KS) sowie ein Verfahren zum Kleben von Bodenbelägen auf vorbehandelten Untergründen.

Es ist in vielen Fällen vorteilhaft und notwendig, Bodenbeläge wie Parkett, Kork, Kautschuk, PVC Bahnen und Fliesen sowie Linoleum auf bauseitig vorliegenden Untergründen wie Estrichen oder Holzoberflächen zu kleben.

Bei besonderen Belastungen (Temperatur und Feuchtigkeit) oder stark dimensionsinstabilen Bodenbelägen (z.B. Massivdielen) werden bevorzugt reaktive Klebstoffe, beispielsweise feuchtigkeitshärtende Klebstoffe auf Basis von Polyurethanprepolymeren verwendet.

Eine neuere, für diese Verwendung geeignete Entwicklung sind Klebstoffe auf Basis silanmodifizierter oligomerer Verbindungen, sogenannte SMP-Klebstoffe (silanmodifizierte Polymerklebstoffe, mitunter auch als Hybridklebstoffe oder silanterminierte Polymerklebstoffe bezeichnet). Diese Klebstoffe sind gekennzeichnet durch oligomere organische Verbindungen (häufig auch als Prepolymere bezeichnet), die feuchtigkeitsreaktive Silangruppen, meist Dimethoxymethyl- oder Trimethoxysilangruppen, tragen. Silanmodifizierte Polymere (SMP) können sehr einfach aus isocyanatgruppenhaltigen Polyurethan-Polymeren erhalten werden, indem deren Isocyanatgruppen mittels Amino-, Thio- oder Hydroxysilanen zu Silangruppen umfunktionalisiert werden. Silanmodifizierte Polymere, welche frei sind von Harnstoffgruppen und nur wenige oder gar keine Urethangruppen enthalten, sind ebenfalls bekannt und beispielsweise durch Umsetzung von Polyetherpolyolen mit Isocyanatosilanen oder durch Hydrosilylierung von allylfunktionellen Polyethern zugänglich. Silanmodifizierte Polymere, die jeweils an den Enden des Polymerrückgrats mit Silangruppen modifiziert sind, werden auch als silanterminierte Polymere (STP) bezeichnet. Nach Kontakt mit Feuchtigkeit aus dem Untergrund oder der Luft vernetzen die feuchtigkeitsreaktiven Silangruppen durch Hydrolyse und anschließende Kondensation zu einem dreidimensionalen Siloxan-Netzwerk, der Klebstoffmatrix.

Weitere Bestandteile dieser Klebstoffe sind flüssige Extender, Weichmacher, mineralische Füllstoffe, Wasserfänger, Haftvermittler, Katalysatoren und weitere Hilfsstoffe. Für die Klebung von Bodenbelägen weisen Klebstoffe auf Basis silanmodifizierter Polymere in der Regel folgende Vorteile auf: Einkomponentigkeit, Abwesenheit von Wasser und Lösemitteln, ausreichend lange offene Zeiten, keine praxisrelevante holzquellende Wirkung, kennzeichnungsfrei nach der deutschen Gefahrstoffverordnung und dem internationalem GHS-Kennzeichnungssystem.

Weiterhin vorteilhaft ist die pseudoplastische Rheologie von SMP-Klebstoffen. In der Praxis bedeutet dies, dass die Klebstoffe nicht verlaufen und sich gut mit einem Zahnspachtel auftragen lassen. Gezogene Klebstoffraupen bleiben formstabil und bieten damit eine wichtige Voraussetzung, kleinere Hohlräume zwischen Bodenbelag und Untergrund überbrücken zu können. Silanmodifizierte Polymerklebstoffe enthalten typischerweise Weichmacher und/oder nichtreaktive flüssige Extender, die die Viskosität des Klebstoffes senken und notwendige Verarbeitungseigenschaften garantieren. Leider sind diese auch verantwortlich für eine Reihe anwendungstechnischer Probleme und Beschränkungen. Die Löseeigenschaften dieser migrationsfähigen Flüssigkeiten bedingen insbesondere ein Anlösen von Gussasphalt als Untergrund, warum dieser vor Klebung eines Bodenbelages mit weichmacherhaltigen silanmodifizierte Polymerklebstoffen grundiert werden muss.

Die Grundierung muss in diesem Fall eine ausreichende Weichmacherbeständigkeit haben, d.h. sie darf durch den Weichmacher aus dem Klebstoff nicht angelöst werden, was ihre Festigkeit reduzieren würde und es darf keine Migration des Weichmachers durch die Grundierung in den Gussasphalt geben.
Typischerweise als Grundierung zum Haftungsaufbau und zur Staubbindung verwendete Dispersionsgrundierungen auf Basis von Vinylacetat-Ethylen-, Styrol-Acrylat- oder Acrylsäureester-Copolymeren sind nicht gegen Weichmacher beständig. Es ist daher bei silanmodifizierten Klebstoffen grundsätzlich mit Haftungsproblemen zu rechnen, insbesondere, wenn diese migrierende Bestandteile enthalten.

Ein weiterer wesentlicher Faktor in der Fußbodentechnik und grundsätzlich bei der Belegung von zementären Untergründen ist der Feuchtegehalt des Untergrundes. Derartige Untergründe können beispielsweise aufgrund zu kurzer Trockenzeit oder auch aufgrund einer permanenten Feuchtequelle unterhalb des Untergrundes einen hohen Feuchtegehalt aufweisen. Derartige Untergründe sind beispielsweise Beton, Zement, Estriche oder Zementfließestriche. Ein schadensfreier Aufbau einer Fußbodenkonstruktion bzw. eine schadensfreie Belegung eines derartigen Untergrundes mit weiteren Materialien kann hier nur erfolgen, wenn der Wassergehalt des Untergrunds im Gleichgewicht steht mit dem mittleren Raumklima (Gleichgewichtsfeuchte des Materials). Sollte dieser Gleichgewichtszustand zum Zeitpunkt des weiteren Fußbodenaufbaus infolge zu kurzer Trockenzeit noch nicht erreicht sein oder eine permanente Feuchtequelle unterhalb des Untergrundes vorhanden sein, kommt es bei der langfristigen Gleichgewichtseinstellung des Feuchtegehalts zur Wasserdampfdiffusion aus dem Untergrund in die Umgebungsluft. Dies ist so lange unproblematisch, wie der Untergrund nicht mit einem Bodenbelag abgedeckt ist oder nur Schichten mit einem sehr geringen Wasserdampfdiffusionswiderstand aufgebracht sind. Bei den meisten Fußbodenaufbauten werden jedoch mehrere Schichten installiert, beispielsweise Grundierungen, Spachtelmassen, Klebstoffe, Folien, Bodenbeläge wie Parkett und zuletzt noch Oberflächenbehandlungsmittel, die jeweils zum Teil sehr hohe Wasserdampfdiffusionswiderstände besitzen. Dann muss bei mehrschichtigen Aufbauten die Schichtfolge so gewählt werden, dass der Wasserdampfdiffusionswiderstand der einzelnen Schichten mit zunehmender Entfernung von der Feuchtequelle abnimmt.
Bei den typischen Aufbauten und Schichtenfolgen in der Fußbodentechnik bedeutet dies in der Praxis, dass auf einem Untergrund mit einem erhöhten, nicht im Gleichgewichtszustand befindlichen Feuchtegehalt die Diffusionsrate von Wasserdampf aus dem Untergrund durch eine Grundierung mit wasserdampfdiffusionsbremsenden Eigenschaften (Wasserdampf-Diffusionsbremse) geringer sein muss als die Wasserdampfdiffusionsrate durch den darauf befindlichen Oberbelag.
Zur Lösung dieser bauphysikalischen Problematik werden im Stand der Technik spezielle Wasserdampfbremsgrundierungen auf unterschiedlicher Rohstoffbasis eingesetzt. Derartige Wasserdampfbremsgrundierungen dürfen jedoch nur auf zementären Untergründen, wie Zementestrichen, Zementfließestrichen oder Betonen aufgrund deren hydraulischen Eigenschaften und deren Wasserbeständigkeit aufgebracht werden.
Am weitesten verbreitet sind 2-komponentige Epoxidharz-Grundierungen (EP-Grundierungen, z.B. Stauf VEP-190), deren Harzkomponente in der Regel aus niedermolekularen Bisphenol A/F-Harzmischungen mit niedrigviskosen aliphatischen Glycidylethern als Reaktivverdünner besteht und die Härterkomponente aus einer Polyamin-/Polyamid-Mischung. Diese Epoxidharz-Grundierungen können lösemittelfrei oder lösemittelhaltig sein und zeichnen sich durch eine gute Penetration in den Untergrund und als Zweikomponenten-Materialien durch eine sichere Erhärtung durch chemische Reaktion in einer großen Bandbreite von Verarbeitungsumständen aus. Ein anwendungstechnischer Nachteil von Epoxidharz-Grundierungen besteht darin, dass eine Haftung auf der durchgehärteten Grundierung nur sehr schwer zu erzielen ist. Die weiteren Komponenten des Fußbodenaufbaus wie Zwischengrundierungen, verschiedene Klebstoffarten oder mineralische Spachtelmassen erzielen keine ausreichende Haftung auf einer ausgehärteten EP-Grundierung. Um eine ausreichende Haftung sicher zu stellen, muss die EP-Grundierung zweilagig aufgetragen werden und dann die zweite Schicht mit großen Mengen Quarzsand abgestreut werden. Etwa die Hälfte des im Überschuss aufgestreuten Sands muss nach Durchhärtung entfernt und entsorgt werden. Die Haftung der weiteren Schichten erfolgt dann primär auf der Oberfläche der Sandkörner, die aus der Epoxidharzoberfläche herausragen. Zudem zeigt sich, dass viele dieser Grundierungen nicht die notwendige Weichmacherbeständigkeit haben und zudem die vor Auftrag von Klebstoffen eine Trocken- oder Wartezeit von bis zu 24h eingehalten werden muss.

Wässrige 2-komponentige Epoxidharz-Grundierungen verfügen zum Teil über deutlich geringere Trocken- bzw. Wartezeiten im Bereich von wenigen Stunden. Jedoch wird bei deren Verwendung zusätzliches Wasser in den Untergrund eingetragen was aus oben besagten Gründen nachteilig ist. Zudem kann in extremen Wetterlagen (hohe Luftfeuchtigkeit) und ungenügender Belüftung bedingt durch eine langsame Verdunstung des Wassers zu einer Verlängerung der Wartezeit kommen.

Weiterer Stand der Technik sind Polyurethan-Grundierungen, die in der Regel einkomponentig (1-K) sind und auf Diphenylmethandiisocyanat-Präpolymeren (MDI) basieren (z.B. Stauf VPU-155). Diese besitzen eine hervorragende Weichmacherbeständigkeit. Ein großer Nachteil ist allerdings, dass die Aushärtereaktionen und damit auch der Endzustand des sich bildenden Polymerfilms stark von den Umgebungsbedingungen abhängig sind, insbesondere der Raumtemperatur, der relativen Raumluftfeuchtigkeit, der Untergrundtemperatur und dem Wassergehalt des Untergrunds. Ein Problem stellt dabei die unterschiedlich stark ausgeprägte CO₂-Entwicklung während der Härtungsreaktionen dar, die zu einem porösen Polymerfilm führt, was sowohl die mechanischen als auch die wasserdampfdiffusionsbremsenden Eigenschaften verschlechtert. Aufgrund der schichtdickenabhängigen Tendenz zum Schäumen durch CO₂-Entwicklung müssen die für eine wirksame Absperrung gegen Feuchtigkeit oder Migration von Weichmacher notwendigen Schichtdicken in zwei Arbeitsgängen aufgetragen werden, wobei nach dem letzten Arbeitsgang in der Regel Wartezeiten von mindestens 12h vor dem Auftrag von Klebstoffen, insbesondere von SMP-Klebstoffen einzuhalten sind.

Aufgabe der vorliegenden Erfindung ist deshalb das Auffinden von Systemen bestehend aus Grundierung und Klebstoff für die Verklebung von Holz-, Kork-, Linonleum-, Kautschuk, und/oder PVC-Böden auf bauseitig vorliegenden Untergründen wie Estrichen, Fliesen oder Holzoberflächen, sowie ein Verfahren zur Verwendung dieses Systems bestehend aus Grundierung und Klebstoff für die Klebung von Holz-, Kork-, Linoleum-, Kautschuk- und/oder PVC-Böden auf bauseitig vorliegenden Untergründen wie beispielsweise Estrichen oder Holzoberflächen, welches die im Stand der Technik bekannten Nachteile nicht aufweist, wie beispielsweise ungeeignete Weichmacherbeständigkeit und/oder ungeeignete Wasserdampfdiffusionsrate der Grundierung, lange Wartezeiten zur Aushärtung der Grundierung, mehrmaliges Auftragen der Grundierung.

Überraschenderweise konnte im Rahmen der vorliegenden Erfindung gezeigt werden, dass sich ein Schichtaufbau bestehend aus Polyaspartat-Grundierung (AG) und härtbaren Zusammensetzungen auf Basis silanmodifizierter Polymere (KS) für die Klebung von Holz-, Kork, Linonleum-, Kautschuk und/oder PVC-Böden auf bauseitig vorliegenden Untergründen wie beispielsweise Estrichen oder Holzoberflächen hervorragend eignen und die im Stand der Technik beschriebenen Nachteile, wie beispielsweise ungeeignete Weichmacherbeständigkeit und/oder Wasserdampfdiffusionsrate der Grundierung, lange Wartezeiten zur Aushärtung der Grundierung vor Klebstoffauftrag, mehrmaliges Auftragen der Grundierung, nicht aufweisen.

Die Aufgabe der vorliegenden Erfindung konnte durch den Schichtaufbau von Polyaspartat-Grundierungen (AG) und härtbaren Zusammensetzungen auf Basis silanmodifizierter Polymere (KS) gelöst werden.

Unter einer "Zusammensetzung" wird im Rahmen der vorliegenden Erfindung ein Gemisch von mindestens zwei Inhaltsstoffen verstanden.

Der Begriff "härtbar" ist dahingehend zu verstehen, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Im Rahmen der vorliegenden Erfindung, des Schichtaufbau von Polyaspartat-Grundierung (AG) und Zusammensetzung auf Basis silanmodifizierter Polymere (KS) sind in der Zusammensetzung (KS) die folgenden, silanmodifizierten Polymere mit mindestens einer Endgruppe der allgemeinen Formel (I)

-Aₙ-R-SiVYZ (I),

enthalten, worin
- A: für eine zweibindige, mindestens ein Heteroatom enthaltende Bindegruppe steht,
- R: für einen zweibindigen Kohlenwasserstoffrest mit 1-12 Kohlenstoff-Atomen steht,
- V, Y, Z: für Substituenten am Si-Atom stehen, die unabhängig voneinander für C₁-C₈-Alkyl-, C₁-C₈-Alkoxy- oder C₁-C₈-Acyloxygruppen stehen, wobei mindestens einer der Reste V, Y, Z für eine C₁-C₈-Alkoxy- oder C₁-C₈-Acyloxygruppe steht, und
- n: für 0 oder 1 steht.

Das vorstehend silanmodifizierte Polymer mit mindestens einer Endgruppe der allgemeinen Formel (I) ist bevorzugt ein Polyether oder ein Poly(meth)acrylsäureester.

Unter einem Polyether wird ein Polymer verstanden, dessen organische Wederholungseinheiten Ether-Funktionalitäten (-C-O-C-) in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Poly(meth)acrylsäureester wird ein Polymer auf der Basis von (Meth)acrylsäureestern verstanden, das daher als Wiederholungseinheit das Strukturmotiv

-CH₂-CR^{a}(COOR^{b})-

aufweist, worin
- R^{a}: für ein Wasserstoffatom (Acrylsäureester) oder für eine Methylgruppe (Methacrylsäureester) steht und
- R^{b}: für lineare, verzweigte, cyclische und/oder auch funktionelle Substituenten enthaltende Alkylreste, beispielsweise für Methyl-, Ethyl-, Isopropyl-, Cyclohexyl, 2-Ethylhexyl-, oder 2-Hydroxyethylreste steht.

Besonders bevorzugt im Rahmen der Erfindung ist das vorstehend silanmodifizierte Polymer mit mindestens einer Endgruppe der allgemeinen Formel (I) ein Polyether. Polyether weisen eine flexible und elastische Struktur auf, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Vorzugsweise beträgt das zahlenmittlere Molekulargewicht Mₙ des dem vorstehend silanmodifizierten Polymer mit mindestens einer Endgruppe der allgemeinen Formel (I) zugrundeliegenden Polyethers 2.000 bis 100.000 g/mol (Dalton), wobei das Molekulargewicht besonders bevorzugt mindestens 6.000 g/mol und insbesondere mindestens 8.000 g/mol beträgt. Zahlenmittlere Molekulargewichte von mindestens 2.000 g/mol sind vorteilhaft für die Polyether im Rahmen der vorliegenden Erfindung, weil erfindungsgemäße Zusammensetzungen (KS) auf der Basis von Polyethern mit einem solchen Mindestmolekulargewicht signifikante filmbildende Eigenschaften aufweisen. Beispielsweise beträgt das zahlenmittlere Molekulargewicht Mₙ des Polyethers 4.000 bis 100.000, vorzugsweise 8.000 bis 50.000, besonders bevorzugt 10.000 bis 30.000, insbesondere 17.000 bis 27.000 g/mol. Diese Molekulargewichte sind besonders vorteilhaft, da die entsprechenden Zusammensetzungen (KS) ein ausgewogenes Verhältnis von Viskosität (leichte Verarbeitbarkeit), Festigkeit und Elastizität aufweisen. Besonders vorteilhaft ist diese Kombination in einem Molekulargewichtsbereich von 18.000 bis 26.000, insbesondere von 20.000 bis 24.000 g/mol, ausgeprägt.

Besonders vorteilhafte viskoelastische Eigenschaften lassen sich erreichen, wenn man Polyether, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Auf diese Art hergestellte Polyether zeichnen sich durch eine besonders enge Molmassenverteilung, durch eine hohe mittlere Molmasse und durch eine sehr niedrige Zahl an Doppelbindungen an den Enden der Polymerketten aus.

Vorzugsweise beträgt die maximale Polydispersität M_{w}/Mₙ des dem vorstehend silanmodifizierten Polymer mit mindestens einer Endgruppe der allgemeinen Formel (I) zugrundeliegenden Polyethers daher 3, besonders bevorzugt 1.7 und ganz besonders bevorzugt 1.5.

Unter dem Molekulargewicht Mₙ wird das zahlenmittlere Molekulargewicht des Polymeren verstanden. Dieses wird, ebenso wie das gewichtsmittlere Molekulargewicht M_{w}, durch Gelpermeationschromatographie (GPC, auch: SEC) bestimmt. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ. Das Verhältnis M_{w}/Mₙ (Polydispersität) gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Eine geringe Polydispersität von beispielsweise kleiner als 1.5 deutet auf eine vergleichsweise enge Molekulargewichtsverteilung und damit auf die spezifische Ausprägung mit dem Molekulargewicht zusammenhängender Eigenschaften, wie zum Beispiel der Viskosität, hin. Insbesondere weist daher im Rahmen der vorliegenden Erfindung der dem vorstehend silanmodifizierten Polymer mit mindestens einer Endgruppe der allgemeinen Formel (I) zugrundeliegende Polyether eine Polydispersität (M_{w}/Mₙ) von kleiner als 1.3 auf.

Unter zweibindigen oder bivalenten, mindestens ein Heteroatom enthaltenden Bindegruppe A wird eine zweibindige chemische Gruppe verstanden, die das Polymergerüst des alkoxy- und/oder acyloxysilanterminierten Polymers mit dem Rest R der Endgruppe verknüpft. Die zweibindige Bindegruppe A kann beispielsweise bei der Herstellung des alkoxy- und/oder acyloxysilanterminierten Polymers ausgebildet werden, zum Beispiel als Amid- beziehungsweise Urethangruppe durch die Reaktion eines mit Hydroxygruppen funktionalisierten Polyethers mit einem Isocyanatosilan. Dabei kann die bivalente Bindegruppe von im zugrundeliegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wederholungseinheiten des Polymergerüsts identisch ist.

Der Index "n" entspricht 0 (Null) oder 1, das heißt die zweibindige Bindegruppe A verknüpft das Polymergrundgerüst mit dem Rest R (n = 1) oder das Polymergerüst ist direkt mit dem Rest R verbunden bzw. verknüpft (n = 0).

Bevorzugt ist die zweibindige Bindegruppe A in der allgemeinen Formel (I) ein Sauerstoffatom oder eine Gruppe -NR'-, worin R' ein H-Atom oder ein Alkyl- oder Arylrest mit 1 bis 12 C-Atomen ist, oder die zweibindige Bindegruppe A enthält eine Amid-, Carbamat-, Harnstoff-, Imino-, Carboxylat-, Carbamoyl-, Amidino-, Carbonat-, Sulfonat- oder Sulfinatgruppe.

Besonders bevorzugt als Bindegruppe A sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können zum Beispiel entstehen, wenn entweder das Polymergerüst terminale Hydroxygruppen enthält und als weitere Komponente Isocyanatosilane eingesetzt werden, oder wenn umgekehrt ein Polymer, welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polymer - eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polymer oder ein terminal mit einer Aminogruppe substituiertes Polymer mit einem Isocyanatosilan zur Reaktion gebracht wird.

Urethan- und Harnstoffgruppen erhöhen vorteilhaft die Festigkeit der Polymerketten und des gesamten vernetzten Polymers.

Der Rest R ist ein zweibindiger Kohlenwasserstoffrest mit 1 bis 12 C-Atomen. Bei dem Kohlenwasserstoffrest kann es sich um einen geradkettigen, verzweigten oder cyclischen Alkylenrest handeln. Der Kohlenwasserstoffrest kann gesättigt oder ungesättigt sein. R ist bevorzugt ein zweibindiger Kohlenwasserstoffrest mit 1 bis 6 C-Atomen. Über die Länge der Kohlenwasserstoffreste, die eines der Bindeglieder beziehungsweise das Bindeglied zwischen Polymergerüst und Silylrest bilden, kann die Aushärtungsgeschwindigkeit der Zusammensetzung beeinflusst werden. Besonders bevorzugt ist R eine Methylen-, Ethylen- oder n-Propylengruppe, insbesondere ein Methylen- oder n-Propylenrest. Alkoxysilan- terminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.

Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilanterminierten Bausteinen kann somit die Aushärtungsgeschwindigkeit der Systeme wunschgemäß beeinflusst werden. Die mit dem Si-Atom direkt verbundenen Substituenten V, Y und Z sind unabhängig voneinander C₁- C₈-Alkylreste, C₁-C₈-Alkoxyreste oder C₁-C₈-Acyloxyreste. Dabei muss mindestens einer der Reste V, Y, Z eine hydrolysierbare Gruppe, das heißt ein C₁-C₈-Alkoxyrest oder ein C₁-C₈-Acyloxyrest sein. Als hydrolysierbare Gruppen werden vorzugsweise Alkoxygruppen, insbesondere Methoxy-, Ethoxy-, i-Propyloxy- und i-Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die durch Hydrolyse der Reste gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Das/die alkoxy- und/oder acyloxysilanterminierte(n) Polymer(e) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, sodass Verklebungen mit guten Festigkeiten erhalten werden können. Darüber hinaus lässt sich über die Menge und den Aufbau der hydrolysierbaren Gruppen - zum Beispiel durch Verwendung von Di- oder Trialkoxysilylgruppen, Methoxygruppen oder längeren Resten - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, sodass damit unter anderem die Elastizität, die Flexibilität und die Hitzebeständigkeit der fertig vernetzten Zusammensetzungen beeinflusst werden können.

Generell verfügen Polymere, die Di- beziehungsweise Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind die Reste V, Y und Z in der allgemeinen Formel (I) jeweils unabhängig voneinander eine Methyl-, eine Ethyl-, eine Methoxy- oder eine Ethoxygruppe, wobei mindestens einer der Reste eine Methoxy- oder Ethoxygruppe ist. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.

Besonders bevorzugt sind V, Y und Z jeweils unabhängig voneinander eine Methyl- oder eine Methoxygruppe, wobei mindestens einer der Reste eine Methoxy-Gruppe ist. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.

Ebenfalls besonders bevorzugt ist V eine Alkylgruppe und Y und Z sind jeweils unabhängig voneinander eine Alkoxygruppe, oder V, Y und Z sind jeweils unabhängig voneinander eine Alkoxygruppe.

Interessante Gestaltungsmöglichkeiten eröffnen auch Kombinationen beider Gruppen. Wird zum Beispiel für V Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Weiterhin sind kommerziell erhältliche silanmodifizierte Polymere, insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951 ); Excestar^{®} (von Asahi Glass Co. Ltd.; insbesondere die Typen S2410, S2420, S3430 oder S3630); SPUR+* (von Momentive Performance Materials; insbesondere die Typen, 1015LM oder 1050MM); Vorasil™ (von Dow Chemical Co.; insbesondere die Typen 602 oder 604); Desmoseal® S (von Covestro Deutschland AG; insbesondere die Typen S XP 2458, S XP 2636, S XP 2749, S XP 2774 oder S XP 2821); TEGOPAC® (von Evonik Industries AG; insbesondere die Typen Seal 100, Bond 150 oder Bond 250); oder Geniosil® STP (von Wacker Chemie AG; insbesondere die Typen E15, E35, E10, E30) zu nennen.

Der Anteil der Gesamtmenge an dem vorstehend silanmodifizierten Polymer mit mindestens einer Endgruppe der allgemeinen Formel (I) in der Zusammensetzung auf Basis silanmodifizierter Polymere (KS) beträgt bevorzugt 5 bis 75 Gew.-Prozent, besonders bevorzugt 10 bis 50 Gew.-Prozent, beispielsweise 12 bis 35 Gew.-Prozent, insbesondere 15 bis 25 Gew.-Prozent, jeweils bezogen auf das Gesamtgewicht der Zusammensetzung (KS).

Weiterhin können die Zusammensetzungen auf Basis silanmodifizierter Polymere (KS) noch weitere Bestandteile wie beispielsweise Weichmacher, Katalysatoren, Füllstoffe, Reaktivverdünner, Trocknungsmittel und Haftvermittler sowie Hilfsstoffe enthalten.

Der Weichmacher ist bevorzugt ausgewählt aus Cyclohexandicarbonsäuredialkylester, bei dem die Alkylreste der Estergruppen unabhängig voneinander jeweils 1 bis 20 C-Atome enthalten, bevorzugt Cyclohexan-1,2-dicarbonsäurediisononylester, auch bezeichnet als Diisononyl-cyclohexan-1,2-dicarbonsäurester (DINCH), , einem anderen Dicarbonsäureester, Fettsäureester, einem Ester OH-Gruppen tragender oder epoxidierter Fettsäuren, einem Fett, einem Glykolsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, zum Beispiel Geliervermögen der Polymere, Kälteelastizität beziehungsweise Kältebeständigkeit oder auch antistatische Eigenschaften realisiert werden.

Von den Polyether-Weichmachern werden bevorzugt endgruppenverschlossene Polyethylenglykole eingesetzt, beispielsweise Polyethylen- oder Polypropylenglykoldi-C₁-C₄-Alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄-C₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im Wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Grundsätzlich können auch Phthalsäureester als Weichmacher eingesetzt werden, diese werden jedoch aufgrund ihres toxikologischen Potentials nicht bevorzugt.

Eine für bestimmte Anwendungen zu hohe Viskosität der Zusammensetzungen auf Basis silanmodifizierter Polymere (KS) kann auch durch Verwendung eines Reaktivverdünners auf einfache und zweckmäßige Weise verringert werden, ohne dass es zu Entmischungserscheinungen (zum Beispiel Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der Zusammensetzung auf Basis silanmodifizierter Polymere (KS) unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0.1 - 6.000 mPas, ganz besonders bevorzugt 1- 1000 mPas (Brookfield RVT, 23°C, Spindel 7, 10 U/min).

Als Reaktivverdünner lassen sich beispielsweise folgende Stoffe einsetzen: mit Isocyanatosilanen umgesetzte Polyalkylenglykole (zum Beispiel Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. Als Reaktivverdünner einsetzbar: MS S203H, MS S303H, MS SAT 010, und MS SAX 350.

Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH-Gruppen enthält. Die OH-Gruppen können sowohl primär als auch sekundär sein.

Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie zum Beispiel Ester, Carbonate, Amide enthalten.

Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch für Zusammensetzungen auf Basis silanmodifizierter Polymere (KS) Verbindungen mit zwei bis vier Isocyanatgruppen, insbesondere mit zwei Isocyanatgruppen bevorzugt.

Unter den Alkoxysilylgruppen sind die Di- und Trialkoxysilylgruppen bevorzugt. Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, I PDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Dii-socyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2-Diphenylmethandiisocyanat oder 4,4-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der Zusammensetzungen auf Basis silanmodifizierter Polymere (KS) lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. C₁-C₆-Alkohole, besonders Methanol, Ethanol, i-Propanol, Isoamylalkohol und Hexanol werden besonders bevorzugt. Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- oder ß-Pinen, Dipenten oder Limonen gewonnen werden. Die Polymerisation dieser Monomere erfolgt in der Regel kationisch unter Initiierung mit Friedel-Crafts- Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform umfassen die Zusammensetzungen auf Basis silanmodifizierter Polymere (KS) ein Silan der allgemeinen Formel (II),

R¹R²N-R³-SiV'Y'Z' (II),

als Haftvermittler, worin
- R¹ und R²: unabhängig voneinander für Wasserstoff oder C₁-C₈-Alkylreste stehen,
- R³: für einen zweibindigen, gegebenenfalls ein Heteroatom enthaltenden Kohlenwasserstoffrest mit 1-12 C-Atomen steht, und
- V', Y', Z': für jeweils unabhängig voneinander C₁-C₈-Alkyl-, C₁-C₈-Alkoxy- oder C₁-C₈-Acyloxyreste stehen, wobei mindestens einer der Reste V', Y', Z' eine C₁-C₈-Alkoxy- oder C₁-C₈-Acyloxygruppe ist.

Derartige Verbindungen weisen naturgemäß eine hohe Affinität zu den bindenden Polymerkomponenten der Zusammensetzung auf Basis silanmodifizierter Polymere (KS), aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.

Bei der Bindegruppe R³ kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn V', Y' und/oder Z' eine Acyloxygruppe sind, kann dies zum Beispiel die Acetoxygruppe -OCO-CH₃ sein.

Ein oder mehrere Haftvermittler ist/sind bevorzugt zu 0.1 bis 5 Gew.-Prozent, stärker bevorzugt zu 0.2 bis 2 Gew.-Prozent, insbesondere zu 0.3 bis 1 Gew.-Prozent, jeweils bezogen auf das Gesamtgewicht der Zusammensetzung, in der Zusammensetzungen auf Basis silanmodifizierter Polymere (KS) enthalten.

Die Zusammensetzungen auf Basis silanmodifizierter Polymere (KS) können einen Katalysator für die Vernetzung der silanfunktionellen Polymere mittels Feuchtigkeit umfassen. Diese sind dem Fachmann bekannt. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren. Bevorzugt werden aminogruppenhaltige Verbindungen eingesetzt.

Als Füllstoffe für die Zusammensetzungen auf Basis silanmodifizierter Polymere (KS) eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind.

Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als Theologische Hilfsmittel beschrieben, zum Beispiel hydrogenisiertes Rizinusöl, Fettsäureamide oder quellbare Kunststoffe wie PVC. Damit sie gut aus einer geeigneten Dosiervorrichtung (zum Beispiel Tube) ausgepresst werden können, besitzen solche Zubereitungen eine Viskosität von 3.000 bis 15.000, vorzugsweise 4.000 bis 8.000 mPas oder auch 5.000 bis 6.000 mPas.

Die Füllstoffe werden vorzugsweise in einer Menge von 1 bis 80 Gew.-Prozent, stärker bevorzugt von 10 bis 70 Gew.-%, beispielsweise von 25 bis 60 Gew.-Prozent, insbesondere von 35 bis 55 Gew.-Prozent, bezogen auf das Gesamtgewicht der Zusammensetzung auf Basis silanmodifizierter Polymere (KS), eingesetzt. Es kann ein einzelner Füllstoff oder eine Kombination mehrerer Füllstoffe verwendet werden.

Beispielsweise wird als Füllstoff eine hochdisperse Kieselsäure mit einer BET-Oberfläche von 10 bis 500 m²/g eingesetzt. Bei ihrer Verwendung bewirkt eine derartige Kieselsäure keine wesentliche Erhöhung der Viskosität der Zusammensetzung auf Basis silanmodifizierter Polymere (KS), trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die Zusammensetzung auf Basis silanmodifizierter Polymere (KS) verwendet wird, verbessert. Bevorzugt werden ungecoatete Kieselsäuren mit einer BET-Oberfläche von kleiner als 100, stärker bevorzugt von kleiner als 65 m2/g, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 m²/g eingesetzt.

Als Zeolithe werden bevorzugt Alkali-Alumosilikate eingesetzt, beispielsweise Natrium-Kalium-Alumosilikate der allgemeinen Summenformel aK₂O*bNa₂O*Al₂O₃*2SiO*nH₂O mit O < a, b < 1 und a+b=1. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0.4 nm bevorzugt. Besonders bevorzugt beträgt die effektive Porenöffnung 0.3 nm ± 0.02 nm. Der/die Zeolith(e) wird/werden vorzugsweise in Form eines Pulvers eingesetzt.

Bevorzugt wird Kreide als Füllstoff verwendet. Als Kreide können dabei kubische, nicht kubische, amorphe und andere Modifikationen von Calciumcarbonat eingesetzt werden.

Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder

Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0.1 bis 20 Gew.-Prozent, bevorzugt 1 bis 5 Gew.-Prozent, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1.5 m²/g und 50 m²/g.

Ferner kann die Zusammensetzung auf Basis silanmodifizierter Polymere (KS) Antioxidantien enthalten. Vorzugsweise beträgt der Anteil der Antioxidantien an der Zusammensetzung auf Basis silanmodifizierter Polymere (KS) bis zu 7 Gew.-Prozent, insbesondere bis zu 5 Gew.-Prozent, jeweils bezogen auf das Gesamtgewicht der Zusammensetzung. Die Zusammensetzung auf Basis silanmodifizierter Polymere (KS) kann darüber hinaus UV-Stabilisatoren enthalten. Vorzugsweise beträgt der Anteil der UV-Stabilisatoren an der Zusammensetzung auf Basis silanmodifizierter Polymere (KS) bis zu 2 Gew.-Prozent, insbesondere bis zu 1 Gew.-Prozent. Als UV- Stabilisatoren besonders geeignet sind die so genannten Hindered Amine Light Stabilisators (HALS). Bevorzugt wird ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die Zusammensetzung auf Basis silanmodifizierter Polymere (KS) weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die Zusammensetzung auf Basis silanmodifizierter Polymere (KS) enthält vorzugsweise 0.01 bis 10 Gew.-Prozent Trockenmittel, bezogen auf das Gesamtgewicht der Zusammensetzung.

Vorzugsweise enthält die Zusammensetzung auf Basis silanmodifizierter Polymere (KS) folgende Bestandteile in den angegebenen Gewichtsanteilen:
5-75 Gew.-Prozent mindestens ein silanmodifiziertes Polymer mit mindestens einer Endgruppe der allgemeinen Formel (I)
5-75 Gew.-Prozent Füllstoff
5-35 Gew.-Prozent Weichmacher
0.01-1 Gew.-Prozent Katalysator
wobei sich die Gewichtsanteile zu 100 Gew.-Prozent aufaddieren und die Gewichtsanteile auf das Gesamtgewicht Zusammensetzung auf Basis silanmodifizierter Polymere (KS) bezogen sind.

Als Hilfsstoffe kann die Zusammensetzung auf Basis silanmodifizierter Polymere (KS) über die bereits aufgeführten Bestandteile hinaus beispielsweise Stabilisatoren, UV-Stabilisatoren, Alterungsschutzmittel, Rheologische Hilfsmittel, Farbpigmente oder Farbpasten, Fungizide, Flammschutzmittel und/oder gegebenenfalls auch in geringem Umfang Lösungsmittel enthalten.

Die Herstellung der Zusammensetzung auf Basis silanmodifizierter Polymere (KS) erfolgt nach bekannten Verfahren durch inniges Vermischen der Bestandteile in geeigneten Dispergieraggregaten, zum Beispiel einem Schnellmischer.

Die Zusammensetzung auf Basis silanmodifizierter Polymere (KS) können natürlich auch statt als Klebstoff als Dichtstoff eingesetzt werden.

Selbstverständlich kann bei der Auswahl der Zusammensetzung auf Basis silanmodifizierter Polymere (KS) auch auf bereits im Handel verfügbare Produkte zurückgegriffen werden, die unter der Bezeichnung SMP-, STP- oder auch Hybrid-Klebstoff vertrieben werden. (Handelsprodukte nennen).

Zweikomponenten (2K)-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente enthalten, sind seit langem bekannt. Sie eignen sich zur Herstellung von hochwertigen Überzügen, die hart, elastisch, abrieb- und lösemittelbeständig und vor allem auch witterungsstabil eingestellt werden können. Innerhalb dieser 2K-Polyurethan-Beschichtungstechnologie haben sich in letzter Zeit bestimmte, estergruppenhaltige, sekundäre Polyamine etabliert, die sich in Kombination mit Polyisocyanaten insbesondere als Bindemittel in lösemittelarmen oder -freien high solid-Beschichtungsmitteln eignen und eine rasche Aushärtung der Beschichtungen bei niedrigen Temperaturen ermöglichen.

Bei diesen sekundären Polyaminen handelt es sich um die sogenannten Polyasparaginsäureester. Diese Polyasparaginsäureester werden auch Aspartate genannt. Ihre Verwendung allein oder in einem Gemisch mit weiteren, gegenüber Isocyanatgruppen reaktionsfähigen Komponenten in 2K-Polyurethan-Beschichtungsmitteln wird beispielsweise in der EP0403921, EP0639628, EP0667362, EP0689881, US5,214,086, US6,605,684, EP0573860, EP0699696, EP0596360, EP0893458A, DE19701835, DE102006002153, EP1767559, WO2001007504, WO2001007399, WO2004033517, US6458293, EP1426397 und US5,243,012 beschrieben.

Die Synthese der Polyasparaginsäureester ist an sich bekannt und erfolgt über eine Addition von primären Aminen an eine aktivierte Kohlenstoff-Doppelbindung vinyloger Carbonylverbindungen, wie beispielsweise in Malein-oder Fumarsäureestern enthaltend, die in der Literatur hinreichend beschrieben ist (Hauben Weyl, Meth. d. Org. Chemie Bd. 11/1, 272 (1957), Usp. Khim. 1969, 38, 1933).
Polyaspartate sind im Stand der Technik als 2-Komponenten Beschichtungssysteme für die Grundierung von mineralischen Untergründen aus EP3098247 bekannt. Im Rahmen dieser Offenbarung wurde die Aufgabe durch die Bereitstellung von Poylaspartaten gelöst, Grundierungssysteme für mineralische Untergründe aufzufinden, die unempfindlich gegen Feuchtigkeit sind und bei niedriger Umgebungstemperatur aushärten, dabei jedoch eine hinreichend lange Verarbeitungszeit haben, um problemlos von Hand applizierbar zu sein und eine ausreichende Benetzung des Untergrundes sicherstellen.

Im Rahmen der vorliegenden Erfindung des Schichtaufbaus von Polyaspartat-Grundierung (AG) und Zusammensetzung auf Basis silanmodifizierter Polymere (KS) werden Polyaspartat-Grundierungen AG verwendet, enthaltend
(i) mindestens eine Isocyanatkomponente, enthaltend mindesten ein Polyisocyanat
(ii) mindestens einen aminofunktionellen Polyasparaginsäureester der allgemeinen Formel (III), 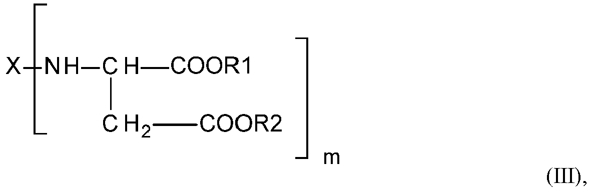
in welcher
- X: für einen m-wertigen, gegebenenfalls ein oder mehrere Heteroatome enthaltenden organischen Rest steht, wie er durch Entfernung der primären Aminogruppe bzw. -gruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
- R1: und R2 für gleiche oder verschiedene organische Reste, vorzugsweise für gleiche oder verschiedene Alkylreste mit je 1 bis 18 Kohlenstoffatomen, bevorzugt für gleiche oder verschiedene Alkylreste mit je 1 bis 8 Kohlenstoffatomen stehen und besonders bevorzugt für Methyl und/oder Ethyl stehen,
- m: für eine ganze Zahl > 1, bevorzugt ≥ 2 und besonders bevorzugt = 2 steht.

Als Isocyanatkomponente i) eigenen sich alle dem Fachmann für die Herstellung von Polyisocyanat-Polyadditionsprodukten, insbesondere Polyurethanen, als geeignet bekannte Polyisocyanate, insbesondere die Gruppe der organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Trimethyl-1-isocyanato-3-isocyanatomethylcyclohexan (Isophorondiisocyanat, IPDI), 1,3-sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3 und/oder 1,4-Bis(isocyanatomethyl)benzol (XDI), 3,3'-Dimethyl-4,4'-biphenyldiisocyanat (TODI), 1,4-Paraphenylendiisocyanat (PPDI), 1,3-Tetramethylxylylendiisocyanate (TMXDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

Bevorzugt sind Polyaspartat-Grundierung (AG) wobei mindestens eine Polyisocyanat ein aliphatisches und/oder cycloaliphatisches Polyisocyanat ist. Ebenfalls bevorzugt ist, dass mindestens ein Polyisocyanat ein Derivat des Hexamethylendiisocyanats und/oder des Pentamethylendiisocyanats, insbesondere ein Hexamethylendiisocyanat-Trimer und/oder ein Pentamethylendiisocyanat-Trimer ist.

Vorzugsweise beträgt das Verhältnis von Polyisocyanaten zu NCO-reaktiven Verbindungen (NH-Gruppen der aminofunktionellen Polyasparaginsäureester, bezogen auf die Stoffmengen der Polyisocyanatgruppen zu den NCO-reaktiven Gruppen, 0.5 zu 1.0 bis 3.0 zu 1.0. Besonders bevorzugt ist ein Verhältnis von 0.9 zu 1.0 bis 1.5 zu 1.0. Ganz besonders bevorzugt ist ein Verhältnis von 1.05 zu 1.0 bis 1.25 zu 1.0.

Bevorzugt sind aminofunktionelle Polyasparaginsäureester (ii) der allgemeinen Formel (III), 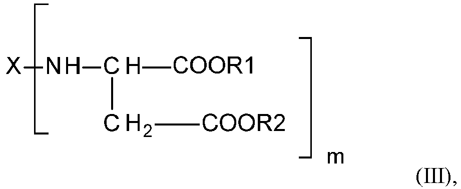 in der
X für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan,
2,4,4'-Triamino-5-methyl-dicyclohexylmethan oder Gemischen derselben erhalten wird und
R1 und R2 unabhängig voneinander für eine Methyl- oder eine Ethylgruppe stehen.

Die Herstellung der aminofunktionellen Polyasparaginsäureester (ii) kann in an sich bekannter Weise durch Umsetzung der entsprechenden primären Polyamine der Formel [X]+NH2 mit Malein- oder Fumarsäureestern der allgemeinen Formel R1OOCCH=CHCOOR2 erfolgen. Geeignete Polyamine sind die oben genannten Diamine. Beispiele geeignete Malein- oder Fumarsäureester sind Maleinsäuredimethylester und bevorzugt Maleinsäurediethylester sowie die entsprechenden Fumarsäureester.
Nicht-limitierende Beispiele für primäre Polyamine der Formel [X]+NH2 im Rahmen der Erfindung sind Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa DuPont), 1,6-Diaminohexan, 2,2,4- und/oder 2,4,4-Trimethyl-1,6-diaminohexan, 1,11-Diaminoundecan,1,12-Diaminododecan oder Triaminononan, Etheramine, wie z.B. 4,9-dioxadodecane-1,12-diamine, 4,7,10-trioxatridecane-1,13-diamine, oder höhermolekulare Polyetherpolyamine mit aliphatisch gebundenen, primären Aminogruppen, wie sie beispielsweise unter der Bezeichnung Jeffamin® von der Firma Huntsman vertrieben werden. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkylbasierte Amine, wie z.B. Fentamine der Fa. Solvay, Dimerfettsäurediamine wie z.B Priamine der Fa. Croda.

Die Herstellung der aminofunktionellen Polyasparaginsäureester (ii) aus den genannten Ausgangsmaterialien erfolgt bevorzugt innerhalb des Temperaturbereichs von 0 bis 100° C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen, wobei die Mitverwendung von Lösungsmitteln weniger bevorzugt ist.

Zur Herstellung der Polyaspartat-Grundierungen (AG) werden die Komponenten (i) und (ii), unmittelbar vor der Applikation in solchen Mengen vermischt, dass das Äquivalentverhältnis der Isocyanatgruppen der Komponente (i) zu den Aminogruppen der Komponente (ii) 0.5:1 bis 1.5:1, vorzugsweise 0.9:1 bis 1.3:1 beträgt, besonders bevorzugt 1.05 bis 1.2.
Die Polyaspartat-Grundierungen (AG) bestehen im Wesentlichen, d.h. mit einem Massenanteil von vorzugsweise mehr als 85%, besonders bevorzugt mehr als 90% aus den Komponenten i) und ii). In untergeordneten Mengen können Hilfs- und Zusatzstoffe der aus der Beschichtungstechnologie bekannten Art mitverwendet werden.

Beispielsweise genannt seien in diesem Zusammenhang Füllstoffe, Farbstoffe und Pigmente, Entlüftungsmittel, Entschäumer, Katalysatoren, Alterungsschutzmittel, Verlaufshilfsmittel, Haftvermittler, Weichmacher, Lösemittel sowie reaktive Verdünner. Bevorzugt enthalten die erfindungsgemäß verwendbaren Grundierungen keine Weichmacher und keine Lösemittel. Als reaktive Verdünner können ggf. Asparaginsäureester auf Basis von Polyetheraminen mitverwendet werden, so wie dies in der WO 2014151307 A1 offenbart wird. Es können aber bevorzugt auch Polyetherpolyole der vorstehend charakterisierten Art als reaktive Verdünner mitverwendet werden. Die genannten reaktiven Verdünner können in einem Massenanteil von vorzugsweise weniger als 15%, bevorzugt weniger als 10% mitverwendet werden.

Zur Herstellung der Polyaspartat-Grundierungen (AG) werden die Einzelkomponenten und gegebenenfalls mitzuverwendende Hilfs- und Zusatzmittel intensiv miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit werden die Reaktionsgemische verarbeitet. Die Polyaspartat-Grundierungen (AG) weisen bei 23° C in der Regel eine Topfzeit von 15 bis 30 Minuten auf, wobei Topfzeit definiert ist als der Zeitraum, in dem die Beschichtung homogen, ohne Fäden zu ziehen, applizierbar ist.

Die aus den Einzelkomponenten erhältlichen, Polyaspartat-Grundierungen (AG) können nach an sich bekannten Methoden, wie beispielsweise durch Spritzen, Streichen, Fluten oder mit Hilfe von Rollen, Walzen oder Rakeln auf beliebige mineralische Substrate aufgetragen werden.

Die Verarbeitungszeit beträgt - abhängig von den umgebenden klimatischen Bedingungen - in der Regel 15 Minuten bis 30 Minuten. Sie härten - abhängig von den umgebenden klimatischen Bedingungen - zumeist innerhalb von 30 bis 90 Minuten zu zähharten Beschichtungen aus, die mechanisch extrem widerstandsfähig sind und eine überragende Haftung zum mineralischen Untergrund zeigen.

Überraschenderweise härten die Polyaspartat-Grundierungen AG auch auf restfeuchten Untergründen z.B. Beton mit einer Restfeuchte von >4% völlig blasen- und porenfrei aus. Dabei scheint also die CO₂-bildende Reaktion der freien Isocyanatgruppen mit der Feuchtigkeit in diesen Polyaspartat-Grundierungen AG überraschenderweise vollständig unterdrückt zu werden, selbst wenn entsprechend den vorstehend gemachten Angaben mit einem signifikanten stöchiometrischen Überschuss an Isocyanatgruppen gearbeitet wird.

Erfindungsgemäß verwendbar sind die Polyaspartat-Grundierungen (AG) für bauseitig vorliegende Untergründe, wie Estrichen oder Holzoberflächen in Kombination mit silanmodifizierten Polymerklebstoffen für die Klebung von Holz-, Kork-, Linoleum-, Kautschuk- und/oder PVC-Böden.

Die Polyaspartat-Grundierungen (AG) weisen eine sehr gute Haftung auf zu bauseitig vorliegenden Untergründen auf, die noch Restmengen an Wasser enthalten können.

Erfindungsgemäß kann die Zusammensetzung auf Basis silanmodifizierter Polymere (KS) bereits nach 1-4h auf die Polyaspartat-Grundierung (AG) aufgetragen werden ohne dass eine Weichmacherunbeständigkeit in Form von Anlösen der Grundierung und/oder Haftungsprobleme erkennbar ist.

Erfindungsgemäß kann die Zusammensetzung auf Basis silanmodifizierter Polymere (KS) auch bis zu 72h nach Aufbringen der Polyaspartat-Grundierung (AG) aufgetragen werden ohne dass es zu Haftungsproblemen zwischen der Grundierung und dem Klebstoff kommt.

Besonders überraschend ist, dass im Rahmen der vorliegenden Erfindung keine Reaktion von bei der Applikation der Zusammensetzung auf Basis silanmodifizierter Polymere (KS) noch vorhandenen Isocyanatgruppen in der Polyaspartat-Grundierung (AG) mit isocyanatreaktiven Gruppen, welche in der Zusammensetzung auf Basis silanmodifizierter Polymere (KS) enthalten sind oder bei der Aushärtung abgespalten werden, erkennbar sind.

Gegenstand der vorliegenden Erfindung ist ein Schichtaufbau umfassend mindestens eine Polyaspartat-Grundierung (AG) und mindestens eine darauf applizierte Zusammensetzung auf Basis silanmodifizierter Polymere (KS).

Ein weiterer Gegenstand der vorliegenden Erfindung ist der oben angegebene Schichtaufbau umfassend mindestens eine Polyaspartat-Grundierung (AG), dadurch gekennzeichnet, dass
(i) mindestens eine Isocyanatkomponente, enthaltend mindestens ein Polyisocyanat, und
(ii) mindestens einen aminofunktionellen Polyasparaginsäureester der allgemeinen Formel 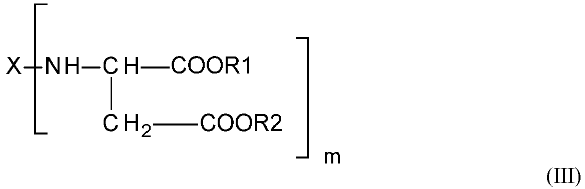 in welcher
   - X: für einen m-wertigen, gegebenenfalls ein oder mehrere Heteroatome enthaltenden organischen Rest steht, wie er durch Entfernung der primären Aminogruppe bzw. -gruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
   - R1 und R2: für gleiche oder verschiedene organische Reste, vorzugsweise für gleiche oder verschiedene Alkylreste mit je 1 bis 18 Kohlenstoffatomen, bevorzugt für gleiche oder verschiedene Alkylreste mit je 1 bis 8 Kohlenstoffatomen stehen und besonders bevorzugt für Methyl und/oder Ethyl stehen,
   - m: für eine ganze Zahl > 1, bevorzugt ≥ 2 und besonders bevorzugt = 2 steht,
   und mindestens eine darauf applizierte härtbare Zusammensetzung auf Basis silanmodifizierter Polymere (KS), dadurch gekennzeichnet, dass die silanmodifizierten Polymere mindestens eine Endgruppe der allgemeinen Formel (I),

   -Aₙ-R-SiVYZ (I),

   in welcher
   - A: für eine zweibindige, mindestens ein Heteroatom enthaltende Bindegruppe steht,
   - R: für einen zweibindigen Kohlenwasserstoffrest mit 1-12 Kohlenstoff-Atomen steht,
   - V, Y, Z: für Substituenten am Si-Atom stehen, die unabhängig voneinander für C₁-Cs-Alkyl-, C₁-C₈-Alkoxy- oder C₁-C₈-Acyloxygruppen stehen, wobei mindestens einer der Reste V, Y, Z für eine C₁-C₈-Alkoxy- oder C₁-C₈-Acyloxygruppe steht, und
   - n: für 0 oder 1 steht, umfassen,
   enthalten ist.

Ein weiterer bevorzugter Gegenstand der vorliegenden Erfindung ist der oben angegebene Schichtaufbau umfassend mindestens eine Polyaspartat-Grundierung (AG), dadurch gekennzeichnet, dass
(i) mindestens eine Isocyanatkomponente, enthaltend mindestens ein Polyisocyanat auf Basis aliphatischer und/oder cycloaliphatischer Diisocyanate,
(ii) mindestens einen aminofunktionellen Polyasparaginsäureester der allgemeinen Formel (III), in welcher
   - X: für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4' -Triamino-5-methyl-dicyclohexylmethan oder Gemischen derselben erhalten wird und
   - R1 und R2: unabhängig voneinander für eine Methyl- oder eine Ethylgruppe stehen,
   und mindestens eine darauf applizierte härtbare Zusammensetzung auf Basis silanmodifizierter Polymere (KS), dadurch gekennzeichnet, dass die silanmodifizierten Polymere mindestens eine Endgruppe der allgemeinen Formel (I), in welcher
   - A: für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
   - R: für einen zweibindigen Kohlenwasserstoffrest mit 1-6 Kohlenstoffatomen steht,
   - V, Y, Z: für Substituenten am Si-Atom und jeweils unabhängig voneinander für eine Methyl-, Ethyl-, Methoxy- oder Ethoxygruppe stehen, wobei mindestens einer der Reste V, Y oder Z für eine Methoxy- oder Ethoxygruppe steht,
   - n: für 0 oder 1 steht, umfassen
   enthalten ist.

Ein weiterer bevorzugter Gegenstand der vorliegenden Erfindung ist der oben angegebene Schichtaufbau umfassend mindestens eine Polyaspartat-Grundierung (AG), dadurch gekennzeichnet, dass
(i) mindestens eine Isocyanatkomponente, enthaltend mindestens ein Polyisocyanat, welches ein Derivat des Hexamethylendiisocyanats und/oder des Pentamethylendiisocyanat ist,
(ii) mindestens einen aminofunktionellen Polyasparaginsäureester der allgemeinen Formel (III), in welcher
   - X: für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4' -Triamino-5-methyl-dicyclohexylmethan oder Gemischen derselben erhalten wird und
   - R1 und R2: unabhängig voneinander für eine Methyl- oder eine Ethylgruppe stehen,
und mindestens eine darauf applizierte härtbare Zusammensetzung auf Basis silanmodifizierter Polymere (KS), dadurch gekennzeichnet, dass die silanmodifizierten Polymere mindestens eine Endgruppe der allgemeinen Formel (I), in welcher
- A: für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
- R: für einen zweibindigen Kohlenwasserstoffrest mit 1-6 Kohlenstoff-Atomen steht,
- V, Y, Z: für Substituenten am Si-Atom und jeweils unabhängig voneinander für eine Methyl- oder Methoxygruppe stehen, wobei mindestens einer der Reste V, Y oder Z für eine Methoxy-Gruppe steht,
- n: für 0 oder 1 steht, umfassen,
enthalten ist.

Ein weiterer bevorzugter Gegenstand der vorliegenden Erfindung ist der oben angegebene Schichtaufbau umfassend mindestens eine Polyaspartat-Grundierung (AG), dadurch gekennzeichnet, dass
(i) mindestens eine Isocyanatkomponente, enthaltend mindestens ein Polyisocyanat, welches ein Derivat des Hexamethylendiisocyanats und/oder des Pentamethylendiisocyanat ist,
(ii) mindestens einen aminofunktionellen Polyasparaginsäureester der allgemeinen Formel (III), in welcher
   - X: für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4' -Triamino-5-methyl-dicyclohexylmethan oder Gemischen derselben erhalten wird und
   - R1 und R2: unabhängig voneinander für eine Methyl- oder eine Ethylgruppe stehen,
   und mindestens eine darauf applizierte härtbare Zusammensetzung auf Basis silanmodifizierter Polymere (KS), dadurch gekennzeichnet, dass die silanmodifizierten Polymere mindestens einer Endgruppe der allgemeinen Formel (I), in welcher
   - A: für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
   - R: für einen zweibindigen Kohlenwasserstoffrest mit 1-6 Kohlenstoffatomen steht,
   - V, Y, Z: für Substituenten am Si-Atom stehen, wobei für V eine Alkylgruppe und Y und Z unabhängig voneinander für eine Alkoxygruppe stehen, und
   - n: für 0 oder 1 steht, umfassen,
   enthalten ist.

Ein weiterer Gegenstand der vorliegenden Erfindung ist ein Schichtsystem umfassend mindestens eine der oben angegebenen Schichtaufbauten umfassend mindestens eine Polyaspartat-Grundierung (AG) und darauf applizierte härtbare Zusammensetzung auf Basis silanmodifizierter Polymere (KS).

Ein weiterer Gegenstand der vorliegenden Erfindung ist das oben angegebene Schichtsystem umfassend mindestens eine der oben angegebenen Schichtaufbauten umfassend mindestens eine Polyaspartat-Grundierung (AG) und darauf applizierte härtbare Zusammensetzung auf Basis silanmodifizierter Polymere (KS) und darauf verklebtem Substrat, beispielsweise Bodenbelag.

Ein weiterer Gegenstand der vorliegenden Erfindung ist ein Verfahren zum Kleben von Bodenbelägen auf vorbehandelten Untergründen unter Verwendung mindestens einer der oben angegebenen Schichtaufbauten umfassend mindestens eine Polyaspartat-Grundierung (AG) als Vorbehandlung und mindestens eine härtbare Zusammensetzung auf Basis silanmodifizierter Polymere (KS) als Klebstoff.

Ein weiterer Gegenstand der vorliegenden Erfindung ist das oben angegebene Verfahren zum Kleben von Bodenbelägen auf vorbehandelten (grundierten) Untergründen unter Verwendung mindestens einer der oben angegebenen Schichtaufbauten umfassend mindestens eine Polyaspartat-Grundierung (AG) als Vorbehandlung (Grundierung) und mindestens eine härtbare Zusammensetzung auf Basis silanmodifizierter Polymere (KS) als Klebstoff, dadurch gekennzeichnet, dass die Polyaspartat-Grundierung (AG) einschichtig aufgetragen wird.

Ein weiterer Gegenstand der vorliegenden Erfindung ist das oben angegebene Verfahren zum Kleben von Bodenbelägen auf vorbehandelten Untergründen unter Verwendung mindestens einer der oben angegebenen Schichtaufbauten umfassend mindestens eine Polyaspartat-Grundierung (AG) als Vorbehandlung (Grundierung) und mindestens eine härtbare Zusammensetzung auf Basis silanmodifizierter Polymere (KS) als Klebstoff, dadurch gekennzeichnet, dass auf den Untergrund zuerst eine Polyaspartat-Grundierung (AG) als Vorbehandlung aufgebracht wird und nachfolgend der Bodenbelag mit mindestens einer härbaren Zusammensetzung auf Basis silanmodifizierter Polymere (KS) auf den so vorbehandelten Untergrund geklebt wird, dadurch gekennzeichnet, dass die härtbare Zusammensetzung auf Basis silanmodifizierter Polymere (KS) zwischen 1-72 h, bevorzugt 1-48h, besonders bevorzugt 2-24h nach dem Aufbringen der Polyaspartat-Grundierung aufgebracht wird.

Bevorzugt weisen die Substrate, auf die die Polyaspartat-Grundierungen (AG) appliziert werden, bei Applikation eine Oberflächentemperatur zwischen 5 und 35 Grad C auf.

Ein weiterer Gegenstand der vorliegenden Erfindung ist die Verwendung mindestens einer der oben angegebenen Schichtaufbauten umfassend mindestens eine Polyaspartat-Grundierung (AG) und mindestens eine härtbare Zusammensetzung auf Basis silanmodifizierter Polymere (KS) bei der Verklebung eines Bodenbelags auf einem Untergrund.

Als Untergrund kommen insbesondere die im Innenausbau üblichen Untergründe in Frage. Dabei handelt es sich beispielsweise um Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, mineralische Spachtelmasse, textiles faserartiges Material oder eine Schichtaufbau dieser Materialien.

Als Bodenbelag kommen beispielsweise Linoleum-Beläge, PVC-Beläge, Kautschukbeläge, Gummibeläge, textile Bodenbeläge, Laminat oder Holzbelagelemente in Frage. In einer bevorzugten Ausführungsform handelt es sich bei dem Bodenbelag um einen Holzbelag, insbesondere Parkett, ganz besonders Massivparkett.

Ein weiterer Gegenstand der vorliegenden Erfindung ist die Verwendung mindestens einer der oben angegebenen Schichtaufbauten umfassend mindestens eine Polyaspartat-Grundierung (AG) und mindestens eine härtbare Zusammensetzung auf Basis silanmodifizierter Polymere (KS) bei der bei der Abdichtung von Fugen, beispielsweise Bauwerksfugen, Fugen zwischen Fassadenelementen. Hierbei kann die Polyaspartat-Grundierung (AG) auf nur einem Substrat oder auf beiden, die Fuge bildenden Substrate, aufgebracht werden.

Kit-of-parts enthaltend mindestens eine der oben angegebenen Polyaspartat-Grundierungen (AG) und mindestens eine der oben angegebenen härtbaren Zusammensetzungen auf Basis silanmodifizierter Polymere (KS).

Das oben angegebene Kit-of-parts enthaltend mindestens eine der oben angegebenen Polyaspartat-Grundierungen (AG) und mindestens eine der oben angegebenen härtbaren Zusammensetzungen auf Basis silanmodifizierter Polymere (KS) für die Verwendung zum Aufbau eines Schichtsystems.

Das oben angegebene Kit-of-parts enthaltend mindestens eine der oben angegebenen Polyaspartat-Grundierungen (AG) und mindestens eine der oben angegebenen härtbaren Zusammensetzungen auf Basis silanmodifizierter Polymere (KS) für die Verwendung zum Aufbau eines Schichtsystems für die Verklebung eines Bodenbelags auf einem Untergrund.

Das oben angegebene Kit-of-parts enthaltend mindestens eine der oben angegebenen Polyaspartat-Grundierungen (AG) und mindestens eine der oben angegebenen härtbaren Zusammensetzungen auf Basis silanmodifizierter Polymere (KS) für die Verwendung zum Aufbau eines Schichtsystems für die Abdichtung von Fugen.

### Experimenteller Teil

### Herstellung eines silanterminierten Prepolymers mit Urethan und Harnstoffgruppen P1

In einem 2 L-Sulfierbecher mit Deckel, Rührer, Thermometer und Stickstoffdurchfluss wurden 880.1g eines difunktionellen Propylenglykols der OH-Zahl 13.4mg KOH/g (ermittelt nach DIN 53240-1(2012)) (Acclaim® Polyol 8200 N der Covestro Deutschland AG; Leverkusen DE) mit 46.7g Isophorondiisocyanat (IPDI, Desmodur ® I, Covestro Deutschland AG, NCO-Gehalt 37.8%, Molare Masse 222 g/mol) bei 60 °C unter Zugabe von 0.04 g Dibutylzinndilaurat für 5h umgesetzt. Nach Zugabe von 74g *N*-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war.

### Herstellung einer härtbaren Zusammensetzung KS1 (z.B. Bodenbelagsklebstoff)

Eine härtbare Zusammensetzung auf Basis der Polymerzusammensetzung P1 wurde gemäß der folgenden Vorschrift hergestellt: 551g von zuvor 16h bei 100°C im Umlufttrockenschrank getrocknetem Füllstoff Omyalite 95 T (Calciumcarbonat, Firma Omya) werden mit 218g Weichmacher (Mesamoll, Firma Lanxess, Wassergehalt 0.03 Gew.-%), 178g Polymerzusammensetzung P1, 8.1g Cab-O-Sil TS 720 (Füllstoff hydrophobe pyrogene Kieselsäure, Firma Cabot, Wassergehalt ca. 0.11 Gew.-%), 23g Dynasilan VTMO (Trocknungsmittel auf Silanbasis, Firma Evonik) und 1.2g 1,8-Diazabicyclo[5.4.0]undec-7-en (Sigma-Aldrich Co. LLC) im Labordissolver mit Butterflyrührer (200 Umdrehungen/min) und Dissolverscheibe (2500 Umdrehungen/min) für 15min unter statischem Vakuum und Kühlung dispergiert. Unter statischem Vakuum wird hierbei verstanden, dass die Apparatur bis auf einen Druck von 200 mbar evakuiert wird (dynamisches Vakuum) und danach die Verbindung zur Vakuumpupe getrennt wird. Die Kühlung wurde so gewählt, dass während der ganzen Herstellung eine Temperatur von 65°C nicht überschritten wird. Im Anschluss wurden 15.4g Dynasilan 1146 (Aminosilan-Haftvermittler, Firma Evonik) zugegeben und mit Dissolverscheibe (1000 Umdrehungen/min) unter statischem Vakuum und Kühlung für 10min vermischt. Zuletzt wurde die Mischung unter dynamischem Vakuum für 5min mit Dissolverscheibe (1000 Umdrehungen/min) weiter gemischt.

### Herstellung einer Polyaspartat-Grundierung AG

### Einsatzstoffe

Desmophen® NH 1420 - Polyasparaginsäureester, Firma Covestro, Äquivalentgewicht 276 g/mol
Desmophen® NH 2850 - Polyasparaginsäureester, Firma Covestro, Äquivalentgewicht 295 g/mol
Desmodur® N 3900 - Polyisocyanat auf Basis Hexamethylendiisocyanat, Firma Covestro,
Äquivalentgewicht 179 g/mol
Sylosiv® A4 - Molekularsieb A4 in Pulverform, Firma Grace GmbH&Co. KG
Tego® Airex 944 - Entschäumer, Firma Evonik Tego Chemie GmbH
Tego® Wet 250 - Benetzungshilfmittel Firma Evonik Tego Chemie GmbH
Desmodur E29 - Polyurethanpreolymer auf Basis MDI, Firma Covestro

**Tabelle 1**

| | A1 | A2 |
|---|---|---|
| Desmophen® NH 1420 | 4846g | 2060g |
| Desmophen® NH 2850 | 0g | 880g |
| Sylosiv® A4 | 96g | 60g |
| Tego® Airex 944 | 49g | 30g |
| Tego® Wet 250 | 9g | 10g |

**Tabelle 2**

| | AG1 | AG2 |
|---|---|---|
| Desmodur® N 3900 | 41.32% | 40.75% |
| Komponente A1 | 58.68% | |
| Komponente A2 | | 59.25% |
| NCO/OH Verhältnis molar | 1.12: 1 | 1.12:1 |

Komponente A wurde hergestellt durch Vermischen aller in Tabelle 1 genannter Komponenten im Dissolver bei 1000 U/min für 30 min.

Komponente A und die in Tabelle 2 genannten Polyisocyanate wurden in den in Tabelle 2 angegebenen Massenverhältnissen im Speedmixer (Gesamtmenge 50 g) für 5 min innig vermischt und unmittelbar nach dem Mischen verarbeitet.

### Bestimmung der Zugscherfestigkeit

Zur Bestimmung der Zugscherfestigkeit wurden einfach überlappte Prüfkörper aus zwei Buchenholzstücken mit einer Überlappungslänge von 10 mm und einer Klebspaltdicke von etwa 1 mm verwendet. Die dazu verwendeten Buchenholzstücke wiesen jeweils folgende Maße auf: Länge=40mm, Breite=20mm, Dicke=5mm und wurden vor Verwendung mindestens 1 Woche bei Tage bei 23 °C/50 % rel. Luftfeuchte gelagert.

Wenn nicht anders beschrieben wurde zur Herstellung der Prüfkörper eines der beiden überlappenden Buchenholzstücke jeweils ohne weitere Vorbehandlung eingesetzt, das zweite Buchenholzstück wurde wie unten unter "Herstellung der vorbehandelten Buchenholzstücke für die Herstellung der Prüfkörper für die Zugscherfestigkeitsprüfung" beschrieben vorbehandelt bzw. grundiert. Auf das vorbehandelte Buchenholzstück wurde jeweils nach der angegebenen Wartezeit der Klebstoff aufgetragen und das zweite Buchenholzstück (unbehandelt) aufgelegt. Seitlich heraustretender Klebstoff wurde gegebenenfalls sofort mit einem Spachtel entfernt. Die Prüfkörper wurden unter Zuhilfenahme von Metallplättchen zur Einstellung der Klebspaltdicke in einer geeigneten Vorrichtung gelagert. Bei den Versuchen ohne Grundierung/Vorbehandlung wurden jeweils zwei nicht vorbehandelte Buchenholzstücke verwendet.

Die Prüfkörper wurden für 3 Tage bei 23 °C/50 % rel. Luftfeuchte gelagert. (LAGERUNGSFOLGE 1)

Alternativ wurden die Prüfkörper wurden für 7 Tage bei 23 °C/50 % rel. Luftfeuchte, danach 20 Tage bei 40 °C im Umluftofen und abschließend einen Tag bei 23 °C/50 % rel. Luftfeuchte gelagert. (LAGERUNGSFOLGE 2)

Alternativ wurden die Prüfkörper für 28 Tage bei 23 °C/50 % rel. Luftfeuchte, danach 28d Tage bei 60 °C im Umluftofen gelagert. (LAGERUNGSFOLGE 3)

Die Messung der Zugscherfestigkeit erfolgte jeweils an eine Zugprüfmaschine bei einer Vorschubgeschwindigkeit von 100 mm/min. Dabei wurden die Prüfkörper bis zum Bruch gedehnt und die benötigten Kräfte gemessen. Die angegebenen Ergebnisse entsprechen dem arithmetischen Mittelwert aus 5 Versuchen.

### Herstellung der vorbehandelten Buchenholzstücke für die Herstellung der Prüfkörper für die Zugscherfestigkeitsprüfung

Zunächst wurde unmittelbar nach Mischen der Komponente A und dem Polyisocyanat (Desmodur® N 3900) die Buchenholzstücke ganzflächig mit dem Gemisch mittels eines Pinsels (Auftragsgewicht 85 g/m²) einschichtig aufgetragen. Die so erhaltenen vorbehandelten bzw. grundierten Buchenholzstücke wurden vor dem Auftragen der härtbaren Zusammensetzungen für den in den folgenden Tabellen angegebenen Zeitraum ("Lagerung vorbehandelter Buchenholzstücke" (Synonym Wartezeit) bei 23 Grad Celsius und 50% relativer Luftfeuchte, falls nicht abweichend angegeben, gelagert, bevor die härtbaren Zusammensetzungen aufgetragen wurden.

Mit diesem Aufbau (Buchenholz/härtbare Zusammensetzung/Grundierung/Buchenholz) konnte die Festigkeit des Verbundes aus Grundierung und ausgehärtetem Klebstoff auf Zugscherbelastung untersucht werden. Insbesondere im Vergleich mit einem Aufbau ohne die Grundierung (Buchenholz/härtbare Zusammensetzung/Buchenholz) zeigt sich dabei, ob sich die Grundierung deutlich negativ auf die Verbundfestigkeit auswirkt, was in der Praxis nicht erwünscht ist..

### Beispiel 1

Es wurden die Zugscherfestigkeiten von Prüfkörpern ermittelt, die unter Verwendung der oben beschriebenen erfindungsgemäßen härtbaren Zusammensetzung KS1 und der erfindungsgemäßen Grundierung AG1 hergestellt wurden.

**Tabelle 3a: Ergebnisse erfindungsgemäße Beispiele (ein Prüfkörper mit AG1 vorbehandelt, Klebstoff KS1)**

| | Zugscherfestigkeit (N/mm²) | Zugscherfestigkeit (N/mm²) | Zugscherfestigkeit (N/mm²) |
|---|---|---|---|
| Lagerung vorbehandelter Buchenholzstücke (Wartezeit) | Lagerungsfolge 1 | Lagerungsfolge 2 | Lagerungsfolge 3 |
| 4h | 2.7 | 3.7 | 3.9 |
| 24h | 2.8 | 3.3 | 4.5 |
| 24h und 72h bei 50 C im Umlufttrockenschrank | 2.6 | 3.4 | 4.5 |

Der Klebstoff zeigt jeweils ein überwiegend kohäsives Versagen. In Teilbereichen löst sich die Grundierung vom Holz. Die Haftung von Grundierung zu Klebstoff ist hervorragend.

### Beispiel 2

Es wurden wie oben beschrieben Zugscherfestigkeiten der oben beschriebenen erfindungsgemäßen härtbaren Zusammensetzung KS1 auf zuvor wie oben beschrieben mit der erfindungsgemäßen Grundierung AG2 beschichteten Buchenholzprüfkörpern ermittelt.

**Tabelle 3b: Ergebnisse erfindungsgemäßes Beispiel (ein Buchenholzstück mit AG2 vorbehandelt, Klebstoff KS2)**

| | Beispiel 4 |
|---|---|
| Lagerung vorbehandelter | Zugscherfestigkeit (N/mm2) |
| Buchenholzstücke (Wartezeit) | Lagerungsfolge 1 |
| 2h | 2.82 |
| 24h | 2.85 |

Der Klebstoff zeigt ein überwiegend kohäsives Versagen. In Teilbereichen löst sich die Grundierung vom Holz. Die Haftung von Grundierung zu Klebstoff ist hervorragend.

Bei Grundierung mit AG2 und nur 2h Wartezeit vor Applikation von KS1 wird eine Zugscherfestigkeit (Lagerungsfolge 1, 3d) erhalten, die auf dem gleichen Niveau liegt wie die die mit einer Wartezeit von 24h erreicht wird.

Beispiele 1 und 2 zeigen, dass die Zugscherfestigkeiten der Prüfkörper mit der erfindungsgemäßen Grundierung der Hölzer auf einem hohen Niveau liegen, unabhängig von der Dauer der Wartezeit (zwischen 2 u 24 h bei bei Lagerung für 72h bei 50 Grad C). Auch nach sehr langer Lagerung unter forcierten Bedingungen (Lagerungsfolge 3) der Prüfkörper werden hohe Zugscherfestigkeiten erreicht, was für eine hohe Weichmacherbeständigkeit spricht..

### Beispiele 3 (Vergleich)

Analog wurde fortgefahren, nur dass anstelle der erfindungsgemäßen AG1 bzw. AG2 nun eine Grundierung auf Basis 1K Polyurethan (Desmodur E29) verwendet wurde, die mit einem Pinsel zweischichtig aufgetragen wurde. Nach dem ersten Auftrag wurde 1h gelagert und dann eine zweite Schicht aufgetragen, sodass insgesamt ein vergleichbares Auftragsgewicht von insgesamt 85g/m2 wie bei AG1 und AG2 in Beispiel 1-4 erreicht wurde. Aus den so vorbehandelten Prüfkörpern wurden nach der in Tabelle 4 angegebenen Wartezeit (gemessen ab 2. Auftrag) die erfindungsgemäße härtbare Zusammensetzung KS1 aufgetragen.

**Tabelle 4: Ergebnisse nicht erfindungsgemäß Grundierung mit 1K Polyurethan (ein Buchenholzstück mit Desmodur E 29 vorbehandelt, Klebstoff KS1)**

| | Beispiel 5 (Vergleich) | Beispiel 6 (Vergleich) |
|---|---|---|
| Lagerung vorbehandelter | Zugscherfestigkeit (N/mm²) | Zugscherfestigkeit (N/mm²) |
| Buchenholzstücke (Wartezeit) | Lagerungsfolge 1 | Lagerungsfolge 2 |
| 4h | 0.7 | 0.5 |
| 16h | 3.7 | 4.3 |

Bei dem Versuch mit 4h Wartezeit zeigte sich, dass die Aushärtung des Klebstoffes in diesem Fall nur sehr langsam und nicht vollständig ablief, da die Prüfkörper kohäsives Versagen bei niedrigen Festigkeiten zeigten und die auf dem Substrat verbliebenen Klebstoffreste noch klebrig waren. Nur wenn eine ausreichend lange Wartezeit vor der Auftragung eingehalten wird, härtet die härtbare Zusammensetzung KS1 aus.

### Beispiel 4 (Vergleich)

Zum Vergleich wurden die Versuche ohne Auftragung von Grundierung auf das Holz wiederholt. Beide Buchenholzprüfkörper waren also nicht vorbehandelt. Es wurden hohe Zugscherfestigkeiten erreicht, die vergleichbar mit denen in den Beispielen 1 und 2 nach 4h Wartezeit erreichten Werten, und höher als die im Vergleichsbeispiel 3 erreichten Werte nach 4h Wartezeit sind.

**Tabelle 5: Ergebnisse nicht erfindungsgemäß ohne Grundierung (KS1 direkt auf nicht vorbehandeltem Buchenholz aufgetragen)**

| | Beispiel 6 | Beispiel 7 |
|---|---|---|
| Lagerung vorbehandelter | Zugscherfestigkeit (N/mm²) | Zugscherfestigkeit (N/mm²) |
| Buchenholzstücke (Wartezeit) | Lagerungsfolge 2 | Lagerungsfolge 3 |
| Ohne | 3.6 | 4.3 |

### Beispiel 5 (Vergleich)

Als Vergleich zu dem erfindungsgemäßen System aus Polyaspartat-Grundierungen (AG) und Zusammensetzungen auf Basis silanmodifizierter Polymere (KS) wurde ein Versuch durchgeführt, bei dem an Stelle der Zusammensetzungen auf Basis silanmodifizierter Polymere (KS) eine nicht erfindungsgemäße, feuchtigkeitshärtende, einkomponentige Zusammensetzung auf Basis eines Polyurethanprepolymeres (Sikaflex Pro-1, Sika) in Schichtaufbau mit der erfindungsgemäßen Grundierung AG 1 verwendet wurde.

Dazu wurden, wie oben beschrieben, Buchenholz-Prüfkörper für die Zugscherfestigkeitsprüfung hergestellt (zweischichtiger Auftrag von Grundierung auf eines der beiden Buchenholzstücke, 4h Wartezeit vor Applikation von Sikaflex Pro-1 auf das vorbehandelte Buchenholzstück).

Um einen mögliche Beeinflussung durch Blasenbildung (CO₂) zu verhindern, wurde bei der Herstellung der Prüfkörper für die Ermittlung der Zugscherfestigkeit abweichend von der allgemeinen Beschreibung oben eine sehr dünne Klebfuge eingestellt, in dem die Prüfkörper mit einem Pressdruck 0.7 N/mm2 in einer geeigneten Vorrichtung ohne Metallplättchen als Abstandshalter gemäß Lagerungsfolge 1 gelagert wurden. Die an diesen Prüfkörpern ermittelte Zugscherfestigkeit betrug 0.6 N/mm².

### Beispiel 6 (Vergleich)

An zu Beispiel 5 vergleichbaren hergestellten und gelagerten Prüfkörpern ohne Grundierung wurde bei Klebung mit nicht erfindungsgemäßer, härtender, einkomponentiger Zusammensetzung auf Basis eines Polyurethanprepolymeres (Sikaflex Pro-1, Sika) eine Zugscherfestigkeit von 1.1 N/mm² erreicht. Bei einem analogen Versuch mit der erfindungsgemäßen Grundierung AG1 und 4h Wartezeit vor wurden hingegen nur eine Zugscherfestigkeit von 0.6 N/mm² erreicht.

**Tabelle 6:**

| | Zugscherfestigkeit SIKAFLEX PRO (N/mm²) Lagerungsfolge 1 |
|---|---|
| Ohne Grundierung Beispiel 6 | 1.1 (köhäsives Versagen) |
| Mit Grundierung AG1 nach 4h Wartezeit Beispiel 5 | 0.6 (köhäsives Versagen) |

Es zeigte sich also, dass mit der nicht erfindungsgemäßen, härtenden, einkomponentigen Zusammensetzung auf Basis eines Polyurethanprepolymeres nach 4h Wartezeit mit der erfindungsgemäßen Grundierung deutlich schlechtere Ergebnisse erzielt wurden, wie ohne die Grundierung. Da kohäsives Versagen vorlag, war anscheinend die Aushärtung des Klebstoffes bei kurzer Wartezeit mit der Grundierung AG1 gestört.

### Beispiel 7 (Vergleich)

An zu Beispiel 5 und 6 vergleichbaren hergestellten und gelagerten Prüfkörpern ohne Grundierung wurde bei Klebung mit einer nicht erfindungsgemäßen Zusammensetzung auf Basis einer härtenden Polyvinylacetatdispersion mit Metallsalzvernetzer Aluminiumchlorid eine Zugscherfestigkeit von 11.75 N/mm² erreicht (Fügeteilversagen). Bei einem analogen Versuch mit der erfindungsgemäßen Grundierung AG1 und 4h Wartezeit vor wurden hingegen nur eine Zugscherfestigkeit von 4.21 N/mm² erreicht, wobei ein adhäsives Versagen beobachtet wurde.

**Tabelle 7:**

| | Zugscherfestigkeit Ponal wasserfest (N/mm²) Lagerungsfolge 1 |
|---|---|
| Ohne Grundierung Beispiel 6 | 11.75 (köhäsives Versagen) |
| Mit Grundierung AG1 nach 4h Wartezeit Beispiel 5 | 4.21 (köhäsives Versagen) |

Auch hier reduzierte die erfindungsgemäße Grundierung die Zugscherfestigkeit des Systems dramatisch. Dies wurde im Falle der Schichtaufbau aus erfindungsgemäßer Grundierung und erfindungsgemäßer härtender Zusammensetzung nicht beobachtet.

Beispiele 7 und 8 zeigen, dass die Auswahl der härtbaren Zusammensetzung (KS) in Schichtaufbau mit der erfindungsgemäßen Grundierung AG nicht trivial ist, da es bei Verwendung der Grundierung AG mit den nicht erfindungsgemäßen härtbaren Zusammensetzungen zu einer deutlich verringerten Gesamtgfestigkeit im System gegenüber den nicht grundierten Systemen kommt und die Leistungsfähigkeit der härtbaren Zusammensetzung dann nicht voll ausgenutzt werden kann.

### Beispiel 9: Prüfung der Haftzugfähigkeit der Grundierung AG1 und SIKAFAST MR

### Herstellung und Lagerung der Prüfkörper:

Es wurde die Haftzugfähigkeit der Grundierung AG1 auf einer vorher durchfeuchteten Betonplatte mit der der Grundierung auf Basis SIKAFAST MR (wässrige, zweikomponentige Epoxydharz-Grundierung, Firma Sika) verglichen.

Als Prüfkörper wurde die Oberseite von Stelcon Ferubin- Hartbetonplatten 30x30 x3cm
BTE Stelcon Deutschland GmbH, Philippsburger Str. 4 , 76726 Germersheim verwendet.

Diese wurden 28d unter Standardbedingungen bei 23 Grad Celsius und 50% relativer Luftfeuchte gelagert, anschließend wurde die Oberseite mit 5% Zitronensäurelösung in Wasser eingestrichen und nach 20 min Einwirkzeit mit einer Bürste unter fließendem Wasser von eventuell anhaftenden Zementschlämmen befreit. Anschließend wurde die Platte für 7d in Wasser gelagert, aus dem Wasser genommen und aufrecht stehend gelagert, sodass oberflächlich anhaftendes Wasser abfließen konnte.

Auf die so vorbereitete Oberfläche wurde nun AG1 unmittelbar nach Herstellung im Speedmixer mittels Rolle (Moltopren-Rolle) mit ca. 200 g/m² Auftragsgewicht auf die Platten appliziert. Danach wurden die grundierten Platten mit der Rückseite auf Kunststoffbahnen für 16h bei 23 Grad Celsius und 50% relativer Luftfeuchte gelagert.

Zum Schaffen einer ebenen Schichtdicke wurden die grundierten Platten mit einer selbstverlaufenden 2 komponentigen Polyurethan Beschichtung auf Basis Setathane D 1150 / Desmodur VL (Kennzahl NCO/OH 1,05) mit ca. 1,5 mm Schichtdicke überschichtet. Danach wurden die Platten erneut für für 24 h mit der Rückseite auf Kunststoffbahnen gelagert.

An einer Serie von Platten (Serie A) wird unmittelbar danach die Haftzugfähigkeitsprüfung durchgeführt. Eine weitere Serie (Serie B) wird so mit der Rückseite in ein Wasserbasin gestellt, dass die Wasseroberfläche ca. 1 cm unter der Grundierung verläuft und für 28d bei 23 Grad Celsius und 50% relativer Luftfeuchte in dieser Weise gelagert.

Analog wurden Platten grundiert und gelagert, nur dass an Stelle der Grundierung AG1 nun SIKAFAST MR (wässrige, 2-komponentige Epoxydharz-Grundierung) hergestellt gemäß Anleitung des Herstellers verwendet wurde.

### Ermittlung der Stirnabzugsfähigkeit:

Die Ermittlung der Stirnabzugsfähigkeit erfolgte mit dem Haftprüfsystem HP 850.

In die Oberseite der wie oben hergestellten und gelagerten Platten werden 3 Bohrkerne mit einem Durchmesser von ca. 5 cm, ca. 5 mm tief in den Beton gefräst. Der Abstand zwischen den Rändern der Bohrkernen war dabei größer als 4 cm. Die Klebefläche wurde mit Schleifpapier angeschliffen, entstaubt und mit Aceton entfettet. Die vorher gereinigten Prüfstempel (rund, 50 mm Durchmesser) wurden mit dem 2K-Epoxidharz-Kleber Metallon FL (Sichelwerke GmbH) in gleichmäßig dünner Schicht unter seitlichem Drehen aufgeklebt, wobei darauf geachtet wurde, dass der dabei eventuell herausquellende Kleber darf nicht in die Fräsnut lief und ggf. entfernt wurde.

Nach 24 h Lagerung bei 23 Grad Celsius und 50% relativer Luftfeuchte wurde die Stirnabzugsfähigkeit ermittelt und wie folgt berechnet:
Dimension der Abreißkraft = N/mm²
Fläche des 50 mm-Stempel = 1964 mm²
Ablesewert = KN
1KN = 1000N
Haftzugfestigkeit = Abreißkraft [N] : Fläche [mm²]

**Tabelle 8: Haftzugfestigkeiten der Grundierung vor und nach Lagerung**

| | SIKA MR FAST | Grundierung A2 |
|---|---|---|
| Serie A | 3.6 (Bruch im Beton) | 3.1 (Bruch im Beton) |
| Serie B | 3.1 (Bruch zwischen Beton und Grundierung) | 2.55 (Bruch zwischen Beton und Grundierung) |

Wie die Tabelle 8 zeigt ist die Haftzugfestigkeit der Grundierung A2 absolut vergleichbar mit dem System des Standes der Technik und liegt jeweils deutlich oberhalb dem für elastische Parkettklebstoffe gemäß DIN EN 14293 geforderten Wert von 1 N/mm².

## Patentansprüche

1. Schichtaufbau umfassend mindestens eine Polyaspartat-Grundierung (AG) und mindestens eine darauf applizierte härtbare Zusammensetzung auf Basis silanmodifizierter Polymere (KS).

2. Schichtaufbau gemäß Anspruch 1 umfassend mindestens eine Polyaspartat-Grundierung (AG), **dadurch gekennzeichnet, dass**
(i) mindestens eine Isocyanatkomponente, enthaltend mindestens ein Polyisocyanat,
und
(ii) mindestens einen aminofunktionellen Polyasparaginsäureester der allgemeinen Formel (III), 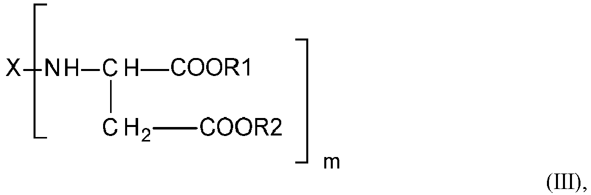 in welcher
X für einen m-wertigen, gegebenenfalls ein oder mehrere Heteroatome enthaltenden organischen Rest steht, wie er durch Entfernung der primären Aminogruppe bzw. -gruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
R1 und R2 für gleiche oder verschiedene organische Reste, vorzugsweise für gleiche oder verschiedene Alkylreste mit je 1 bis 18 Kohlenstoffatomen, bevorzugt für gleiche oder verschiedene Alkylreste mit je 1 bis 8 Kohlenstoffatomen stehen und besonders bevorzugt für Methyl und/oder Ethyl stehen,
m für eine ganze Zahl > 1, bevorzugt ≥ 2 und besonders bevorzugt = 2 steht,
und mindestens eine darauf applizierte härtbare Zusammensetzung auf Basis silanmodifizierter Polymere (KS), **dadurch gekennzeichnet, dass** die silanmodifizierten Polymere mindestens eine Endgruppe der allgemeinen Formel (I),
-Aₙ-R-SiVYZ (I),
in welcher
A für eine zweibindige, mindestens ein Heteroatom enthaltende Bindegruppe steht,
R für einen zweibindigen Kohlenwasserstoffrest mit 1-12 Kohlenstoff-Atomen steht,
V, Y, Z für Substituenten am Si-Atom stehen, die unabhängig voneinander für C₁-Cs-Alkyl-, C₁-C₈-Alkoxy- oder C₁-C₈-Acyloxygruppen stehen, wobei mindestens einer der Reste V, Y, Z für eine C₁-C₈-Alkoxy- oder C₁-C₈-Acyloxygruppe steht, und
n für 0 oder 1 steht, umfassen,
enthalten ist.

3. Schichtaufbau gemäß Ansprüchen 1 und 2 umfassend mindestens eine Polyaspartat-Grundierung (AG), **dadurch gekennzeichnet, dass**
(i) mindestens eine Isocyanatkomponente, enthaltend mindestens ein Polyisocyanat auf Basis aliphatischer und/oder cycloaliphatischer Diisocyanate,
(ii) mindestens einen aminofunktionellen Polyasparaginsäureester der allgemeinen Formel (III), in welcher
X für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4'-Triamino-5-methyl-dicyclohexylmethan oder Gemischen derselben erhalten wird und
R1 und R2 unabhängig voneinander für eine Methyl- oder eine Ethylgruppe stehen,
und mindestens eine darauf applizierte härtbare Zusammensetzung auf Basis silanmodifizierter Polymere (KS), **dadurch gekennzeichnet, dass** die silanmodifizierten Polymere mindestens eine Endgruppe der allgemeinen Formel (I), in welcher
A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
R für einen zweibindigen Kohlenwasserstoffrest mit 1-6 Kohlenstoffatomen steht,
V, Y, Z für Substituenten am Si-Atom und jeweils unabhängig voneinander für eine Methyl-, Ethyl-, Methoxy- oder Ethoxygruppe stehen, wobei mindestens einer der Reste V, Y oder Z für eine Methoxy- oder Ethoxygruppe steht,
n für 0 oder 1 steht, umfassen,
enthalten ist.

4. Schichtaufbau gemäß Ansprüchen 1 bis 3 umfassend mindestens eine Polyaspartat-Grundierung (AG), **dadurch gekennzeichnet, dass**
(i) mindestens eine Isocyanatkomponente, enthaltend mindestens ein Polyisocyanat, welches ein Derivat des Hexamethylendiisocyanats und/oder des Pentamethylendiisocyanat ist,
(ii) mindestens einen aminofunktionellen Polyasparaginsäureester der allgemeinen Formel (III), in welcher
X für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4' -Triamino-5-methyl-dicyclohexylmethan oder Gemischen derselben erhalten wird und
R1 und R2 unabhängig voneinander für eine Methyl- oder eine Ethylgruppe stehen,
und mindestens eine darauf applizierte härtbare Zusammensetzung auf Basis silanmodifizierter Polymere (KS), **dadurch gekennzeichnet, dass** die silanmodifizierten Polymere mindestens eine Endgruppe der allgemeinen Formel (I), in welcher
A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
R für einen zweibindigen Kohlenwasserstoffrest mit 1-6 Kohlenstoff-Atomen steht,
V, Y, Z für Substituenten am Si-Atom und jeweils unabhängig voneinander für eine Methyl- oder Methoxygruppe stehen, wobei mindestens einer der Reste V, Y oder Z für eine Methoxy-Gruppe steht,
n für 0 oder 1 steht, umfassen
enthalten ist.

5. Schichtaufbau gemäß Ansprüchen 1 bis 4 umfassend mindestens eine Polyaspartat-Grundierung (AG), **dadurch gekennzeichnet, dass**
(i) mindestens eine Isocyanatkomponente, enthaltend mindestens ein Polyisocyanat, welches ein Derivat des Hexamethylendiisocyanats und/oder des Pentamethylendiisocyanat ist,
(ii) mindestens einen aminofunktionellen Polyasparaginsäureester der allgemeinen Formel (III), in welcher
X für einen n-wertigen organischen Rest steht, der durch Entfernung sämtlicher der Aminogruppen aus einem Polyamin, ausgewählt aus der Gruppe 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexymethan, 2,4,4' -Triamino-5-methyl-dicyclohexylmethan oder Gemischen derselben erhalten wird und
R1 und R2 unabhängig voneinander für eine Methyl- oder eine Ethylgruppe stehen,
und mindestens eine darauf applizierte härtbare Zusammensetzung auf Basis silanmodifizierter Polymere (KS), **dadurch gekennzeichnet, dass** die silanmodifizierten Polymere mindestens einer Endgruppe der allgemeinen Formel (I), in welcher
A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
R für einen zweibindigen Kohlenwasserstoffrest mit 1-6 Kohlenstoffatomen steht,
V, Y, Z für Substituenten am Si-Atom stehen, wobei für V eine Alkylgruppe und Y und Z unabhängig voneinander für eine Alkoxygruppe stehen, und
n für 0 oder 1 steht, umfassen,
enthalten ist.

6. Schichtsystem umfassend mindestens eine der in Ansprüchen 1 bis 5 angegebenen Schichtaufbauten umfassend mindestens eine Polyaspartat-Grundierung (AG) und darauf applizierte härtbare Zusammensetzung auf Basis silanmodifizierter Polymere (KS) und darauf verklebtes Substrat, beispielsweise ein Bodenbelag.

7. Verfahren zum Kleben von Bodenbelägen auf vorbehandelten Untergründen unter Verwendung mindestens einer der in Ansprüchen 1 bis 5 angegebenen Schichtaufbauten umfassend mindestens eine Polyaspartat-Grundierung (AG) als Vorbehandlung und mindestens einer härtbare Zusammensetzung auf Basis silanmodifizierter Polymere (KS) als Klebstoff.

8. Verfahren gemäß Anspruch 7, **dadurch gekennzeichnet, dass** die Polyaspartat-Grundierung (AG) einschichtig aufgetragen wird.

9. Verfahren gemäß Ansprüchen 7 und 8, **dadurch gekennzeichnet, dass** auf den Untergrund zuerst eine Polyaspartat-Grundierung (AG) als Vorbehandlung aufgebracht wird und nachfolgend der Bodenbelag mit mindestens einer härtbaren Zusammensetzung auf Basis silanmodifizierter Polymere (KS) auf den so vorbehandelten Untergrund geklebt wird, **dadurch gekennzeichnet, dass** die härtbare Zusammensetzung auf Basis silanmodifizierter Polymere (KS) zwischen 1-72 h, bevorzugt 1-48h, besonders bevorzugt 2-24h nach dem Aufbringen der Polyaspartat-Grundierung aufgebracht wird.

10. Verwendung mindestens einer der in den Ansprüchen 1-5 angegebenen Schichtaufbauten umfassend mindestens eine Polyaspartat-Grundierung (AG) und mindestens eine härtbare Zusammensetzung auf Basis silanmodifizierter Polymere (KS) bei der Verklebung eines Bodenbelags auf einem Untergrund.

11. Verwendung mindestens einer der in den Ansprüchen 1-5 angegebenen Schichtaufbauten umfassend mindestens eine Polyaspartat-Grundierung (AG) und mindestens eine härtbare Zusammensetzung auf Basis silanmodifizierter Polymere (KS) bei der bei der Abdichtung von Fugen, beispielsweise Bauwerksfugen, Fugen zwischen Fassadenelementen.

12. Kit-of-parts enthaltend mindestens eine der in Ansprüchen 1-5 angegebenen Polyaspartat-Grundierungen (AG) und mindestens eine der in Ansprüchen 1-5 angegebenen härtbaren Zusammensetzungen auf Basis silanmodifizierter Polymere (KS).

13. Kit-of-parts gemäß Anspruch 12 für die Verwendung zum Aufbau eines Schichtsystems.

14. Kit-of-parts gemäß Ansprüchen 12 und 13 für die Verklebung eines Bodenbelags auf einem Untergrund.

15. Kit-of-parts gemäß Ansprüchen 12 und 13 für die Abdichtung von Fugen.
